# EUROPEAN PATENT APPLICATION

(11) **EP 2 741 440 A1**
(43) Date of publication of application: **11.06.2014**
(21) Application number: 12822567.9
(22) Date of filing: 01.08.2012
(51) Int. Cl.: H04L 1/16

(54) **CHANNEL STATE INFORMATION FEEDBACK INSTRUCTION, FEEDBACK METHOD AND DEVICE**

(30) Priority: 05.08.2011 CN 201110224320
(71) Applicant: China Academy of Telecommunications Technology, Hai Dian District Beijing 100191 (CN)
(72) Inventor: CHEN, Wenhong, Beijing 100191 (CN); GAO, Qiubin, Beijing 100191 (CN); ZHANG, Ranran, Beijing 100191 (CN)
(74) Representative: Nony
(86) International application number: PCT/CN2012/079465
(87) International publication number: WO 2013/020475

(57) **Abstract**

The invention discloses a method of and apparatus for indicating a feedback of and feeding back Channel State Information (CSI) and relates to the field of wireless communication technologies so as to implement a solution in which a user equipment feeds back CSI aperiodically for a set of measurement information of transmission point and/or a measurement set indicated by a base station. In the invention, a base station determines from a result of joint scheduling of multiple transmission points a set of measurement information of transmission point and/or a measurement set corresponding to a set of downlink carriers for which CSI is to be fed back aperiodically by a user equipment; and the base station sends to the user equipment indication information for the determined set of measurement information of transmission point and/or the determined measurement set corresponding to the set of downlink carriers for which CSI is to be fed back aperiodically. The user equipment feeds back CSI aperiodically according to the indication information. With the invention, the user equipment can feed back CSI aperiodically for the set of measurement information of transmission point and/or the measurement set indicated by the base station.

## Description

This application claims the benefit of Chinese Patent Application No. 201110224320.1, filed with the Chinese Patent Office on August 5, 2011 and entitled "Method of and apparatus for indicating feedback of and feeding back channel state information", which is hereby incorporated by reference in its entirety.

### Field of the Invention

The present invention relates to the field of wireless communications and particularly to a method of and apparatus for indicating a feedback of and feeding back channel state information.

### Background of the Invention

The technology of Coordinated Multipoint Transmission/Reception (CoMP) refers to cooperation between multiple geographically separated transmission points. Generally the multiple transmission points are base stations of different cells or multiple Remote Radio Heads (RRHs) controlled by the same base station of a cell. With coordinated transmission between the multiple transmission points, interference between the different transmission points can be lowered effectively, and the throughput of a user, particularly a cell edge user, can be improved. Downlink coordinated multipoint transmission technical solutions are generally divided into two categories: Coordinated Scheduling/Beamforming (CS/CB) and joint processing.

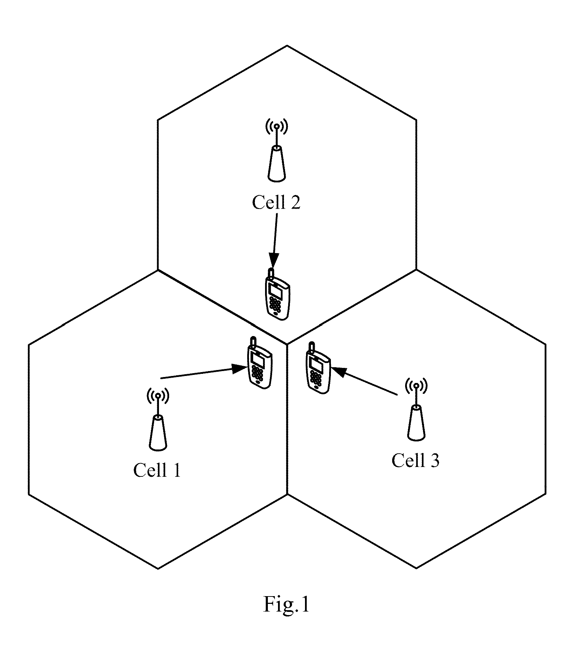

Coordinated scheduling refers to coordination of temporal, frequency and spatial resources between transmission points to avoid or lower interference between them. Inter-cell interference is a predominant factor restricting the performance of a cell edge User Equipment (UE), so coordinated scheduling can improve the performance of the cell edge UE by lowering inter-cell interference. As illustrated in Fig.1, with coordinated scheduling of three transmission points, three UEs with possible interference to each other can be scheduled onto resources orthogonal to each other to avoid effectively interference between the transmission points. Coordinated beamforming schedules beamforming directions for multiple users in the cooperating cells to make beam directions for the different users of the cells orthogonal to each other to thereby lower interference between them. Similar to single-cell Multiple-User Multi-Input Multi-Output (MU-MIMO) transmission, coordinated beamforming is performed primarily by interference suppression processing at a transmitter. Thus downlink channel information of a cooperating cell needs to be obtained at a base station so as to suppress interference of transmission for the current user to transmission for the other users.

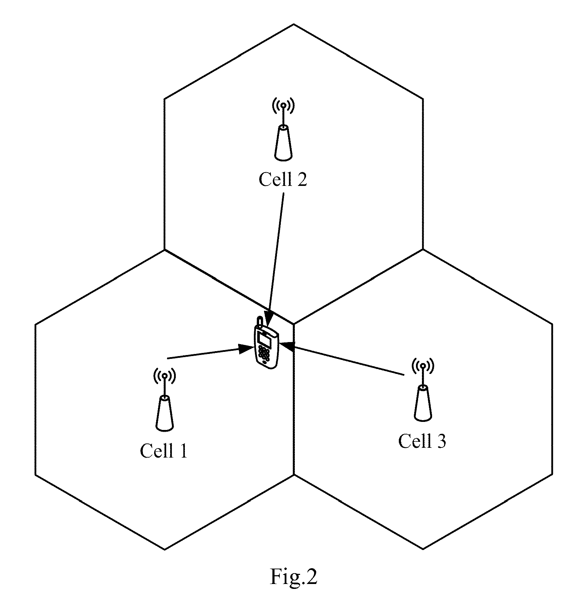

The joint processing solution includes two modes including dynamic transmission point switching and joint transmission. In dynamic transmission point switching, a base station can switch dynamically a transmission point transmitting a signal to a user to thereby always select an optimum transmission point to transmit data. In order to perform dynamic transmission point switching, the base station needs to obtain channel information of multiple optional cells or obtains channel information of the optimum transmission point over a feedback channel. In the joint transmission solution, the multiple transmission points transmit data to the UE to enhance reception of the signal by the UE. As illustrated in Fig.2, the three transmission points transmit data to the UE over the same resource, and the UE receives the signal of the multiple cells concurrently. On one hand, useful signals from the multiple cells can be integrated to improve the quality of the signal received by the UE. On the other hand, interference to the UE can be lowered to thereby improve the performance of the system. This solution requires the UE to feed back channel information of the multiple cells and even relative channel information between the cells to thereby ensure that the multiple cells can perform scheduling, precoding and data transmission jointly.

In a Long Term Evolution-Advanced (LTE-A) system, the UE estimates channel information of the base station to the UE according to a Channel State Information Reference Signal (CSI-RS) configured by the base station and calculates a Channel Quality Indictor (CQI) and feeds back to the base station, where a Precoding Matrix Indicator (PMI) and a Rank Indication (RI) may also be fed back along with the CQI. The base station triggers the UE by Downlink Control Information (DCI) to report aperiodically Channel State Information (CSI), and the UE feeds back the downlink RI/PMI/CQI in a specific feedback pattern over a Physical Uplink Shared Channel (PUSCH) upon reception of a trigger instruction. At this time, if a cell is configured with multiple downlink carriers, then a specific carrier for which the channel information is fed back needs to be further indicated in the trigger instruction.

The inventors have identified during making of the invention the following technical problems:

In the prior art, the base station can only obtain channel information of a single cell (that is, a serving cell of the UE) but can not obtain channel information of another cooperating cell over the existing PUSCH, thus making it difficult to perform coordinated scheduling or coordinated transmission.

### Summary of the Invention

Embodiments of the invention provide a method of and apparatus for indicating a feedback of channel state information so as to implement a solution in which a base station indicates a set of measurement information of transmission point and/or a measurement set for which CSI is to be fed back aperiodically by a user equipment.

A method of indicating a feedback of channel state information CSI includes:
determining, by a base station, from a result of joint scheduling of multiple transmission points a set of measurement information of transmission point and/or a measurement set corresponding to a set of downlink carriers for which CSI is to be fed back aperiodically by a user equipment; and
sending, by the base station, to the user equipment indication information for the determined set of measurement information of transmission point and/or the determined measurement set corresponding to the set of downlink carriers for which CSI is to be fed back aperiodically.

A base station includes:
a determining unit configured to determine from a result of joint scheduling of multiple transmission points a set of measurement information of transmission point and/or a measurement set corresponding to a set of downlink carriers for which CSI is to be fed back aperiodically by a user equipment; and
a sending unit configured to send to the user equipment indication information for the determined set of measurement information of transmission point and/or the determined measurement set corresponding to the set of downlink carriers for which CSI is to be fed back aperiodically.

In this solution, a base station determines from a result of joint scheduling of multiple transmission points a set of measurement information of transmission point and/or a measurement set corresponding to a set of downlink carriers for which CSI is to be fed back aperiodically by a user equipment; and sends to the user equipment indication information for the determined set of measurement information of transmission point and/or the determined measurement set corresponding to the set of downlink carriers for which CSI is to be fed back aperiodically, thereby implementing the solution in which the base station indicates the set of measurement information of transmission point and/or the measurement set for which CSI is to be fed back aperiodically by the user equipment.

Embodiments of the invention provide a method of and apparatus for feeding back channel state information so as to implement a solution in which a user equipment feeds back CSI aperiodically for a set of measurement information of transmission point and/or a measurement set indicated by a base station.

A method of feeding back channel state information CSI includes:
receiving, by a user equipment, indication information sent from a base station for a set of measurement information of transmission point and/or a measurement set corresponding to a set of downlink carriers for which CSI is to be fed back aperiodically; and
feeding, by the user equipment, CSI corresponding to the set of measurement information of transmission point and/or the measurement set corresponding to the set of downlink carriers back to the base station according to the indication information.

A user equipment includes:
a receiving unit configured to receive indication information sent from a base station for a set of measurement information of transmission point and/or a measurement set corresponding to a set of downlink carriers for which CSI is to be fed back aperiodically; and
a feedback unit configured to feed CSI corresponding to the set of measurement information of transmission point and/or the measurement set corresponding to the set of downlink carriers back to the base station according to the indication information.

In this solution, a user equipment receives indication information sent from a base station for a set of measurement information of transmission point and/or a measurement set corresponding to a set of downlink carriers for which CSI is to be fed back aperiodically; and feeds CSI corresponding to the set of measurement information of transmission point and/or the measurement set corresponding to the set of downlink carriers back to the base station according to the indication information, thereby implementing the solution in which the user equipment feeds back CSI aperiodically for the set of measurement information of transmission point and/or the measurement set indicated by the base station.

### Brief Description of the Drawings

Fig.1 is a schematic diagram of coordinated scheduling of transmission points in the prior art;
Fig.2 is a schematic diagram of joint transmission by transmission points in the prior art;
Fig.3 is a schematic flow chart of a method according to an embodiment of the invention;
Fig.4 is a schematic flow chart of another method according to an embodiment of the invention;
Fig.5 is a schematic structural diagram of an apparatus according to an embodiment of the invention; and
Fig.6 is a schematic structural diagram of another apparatus according to an embodiment of the invention.

### Detailed Description of the Embodiments

In the invention, a base station needs to preconfigure a user equipment with a measurement set in higher-layer signaling, where the measurement set is a set of one or more measurement information of transmission point, measurement information of each transmission point can include configuration information of a downlink reference signal or signals of one or more downlink carriers or an index of the configuration information or cell identifier (ID) information corresponding to the transmission point, and the configuration information of the downlink reference signal can be configuration information of a CSI-RS or can include carrier information, etc., of the downlink reference signal. The user equipment can search a local database for the configuration information of the corresponding downlink reference signal by the index of the configuration information or the cell ID information. The measurement set as referred to in the invention generally refers to a set of all the measurement information of transmission point to be measured by the UE.

The measurement set can be configured by configuring a measurement set for all the downlink carriers so that respective measurement information of transmission point in the measurement set includes configuration information of downlink reference signals of all the downlink carriers or an index of the configuration information or cell ID information corresponding to the measurement information of transmission point; or by configuring a measurement set respectively for each set of downlink carriers so that respective measurement information of transmission point in each measurement set includes configuration information of downlink reference signals of respective downlink carriers in the corresponding set of downlink carriers or an index of the configuration information.

The set of measurement information of transmission point is a set of a part or all of the measurement information of transmission point in the measurement set. For a configured measurement set, there may be one or more sets of measurement information of transmission point corresponding to the measurement set (that is, a set or sets of measurement information of transmission point in the measurement set), for example, if a measurement set includes two measurement information of transmission point A and B, then there may be at most three sets of measurement information of transmission point corresponding to the measurement set: {A}, {A, B} and {B}.

The set of downlink carriers is a set including information of one or more downlink carriers, for example, if a system has two downlink carriers a and b aggregated, then there may be at most three sets of downlink carriers: {a}, {a, b} and {b}.

In order to implement a solution in which a base station indicates a set of measurement information of transmission point and/or a measurement set for which CSI is to be fed back aperiodically by a user equipment, an embodiment of the invention provides a method of indicating a feedback of CSI.

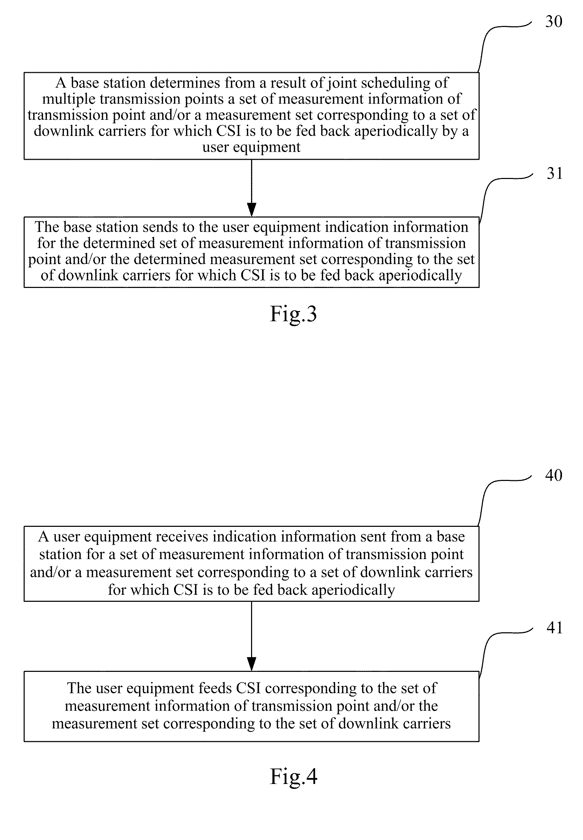

As illustrated in Fig.3, a method of indicating a feedback of CSI according to an embodiment of the invention includes the following steps:
Step 30: A base station determines from a result of joint scheduling of multiple transmission points a set of measurement information of transmission point and/or a measurement set corresponding to a set of downlink carriers for which CSI is to be fed back aperiodically by a user equipment; and
Step 31: The base station sends to the user equipment indication information for the determined set of measurement information of transmission point and/or the determined measurement set corresponding to the set of downlink carriers for which CSI is to be fed back aperiodically.

The step 31 can be performed particularly in one of the following three schemes:
In a first scheme, the base station sends to the user equipment the indication information for a set of measurement information of transmission point in a preconfigured measurement set (the set of measurement information of transmission point is the set of measurement information of transmission point determined in the step 31) for which CSI is to be fed back aperiodically, where the set of measurement information of transmission point includes a part or all of the measurement information of transmission point in the measurement set;
In a second scheme, the base station sends to the user equipment the indication information for the determined measurement set corresponding to the set of downlink carriers for which CSI is to be fed back aperiodically; and
In a third scheme, the base station sends to the user equipment the indication information for the set of measurement information of transmission point in the determined measurement set corresponding to the set of downlink carriers (the set of measurement information of transmission point is the set of measurement information of transmission point determined in the step 31) for which CSI is to be fed back aperiodically, where the set of measurement information of transmission point includes a part or all of the measurement information of transmission point in the determined measurement set corresponding to the set of downlink carriers.

The first scheme can be applicable in the case that a measurement set is configured for all the downlink carriers. The first scheme and the third scheme can be applicable in the case that a measurement set is configured respectively for each set of downlink carriers.

Particularly the indication information can occupy 1 bit or 2 bits or 3 bits. Examples will be described below:
For the first scheme, the base station sends 1-bit indication information to the user equipment to indicate a set of measurement information of transmission point including all the measurement information of transmission point in the preconfigured measurement set for which CSI is to be fed back aperiodically by the user equipment; or
The base station sends the 1-bit indication information to the user equipment to indicate a set of measurement information of transmission point including the first measurement information of transmission point in the preconfigured measurement set for which CSI is to be fed back aperiodically by the user equipment; or
The base station sends 2-bit or 3-bit indication information to the user equipment to indicate the first measurement information of transmission point in the measurement set or the set of measurement information of transmission point in the measurement set for which CSI is to be fed back aperiodically by the user equipment, where the set of measurement information of transmission point includes a part or all of the measurement information of transmission point in the measurement set.

In the second scheme, the base station sends 2-bit or 3-bit indication information to the user equipment to indicate the measurement set corresponding to the current carrier of the indication information or the determined measurement set corresponding to the set of downlink carriers for which CSI is to be fed back aperiodically by the user equipment.

In the third scheme, the base station sends 2-bit or 3-bit or 4-bit indication information to the user equipment to indicate the set of measurement information of transmission point in the determined measurement set corresponding to the set of downlink carriers for which CSI is to be fed back aperiodically by the user equipment, where the set of measurement information of transmission point includes a part or all of the measurement information of transmission point in the determined measurement set corresponding to the set of downlink carriers.

Furthermore before the base station sends the indication information to the user equipment, the base station needs to notify in higher-layer signaling the user equipment of information about sets of measurement information of transmission point in respective measurement sets, measurement sets corresponding to respective sets of downlink carriers and sets of measurement information of transmission point in the measurement sets corresponding to the respective sets of downlink carriers. The user equipment can know from such information measurement information of transmission point included in the respective sets of measurement information of transmission point, the sets of downlink carriers corresponding to the respective measurement sets, etc.

In the step 31, the base station can send the indication information to the user equipment in DCI signaling over a Physical Downlink Control Channel (PDCCH).

In order to implement a solution in which a user equipment feeds back CSI aperiodically for a set of measurement information of transmission point and/or a measurement set indicated by a base station, an embodiment of the invention provides a method of feeding back CSI.

As illustrated in Fig.4, a method of feeding back CSI according to an embodiment of the invention includes the following steps:
Step 40: A user equipment receives indication information sent from a base station for a set of measurement information of transmission point and/or a measurement set corresponding to a set of downlink carriers for which CSI is to be fed back aperiodically; and
Step 41: The user equipment feeds CSI corresponding to the set of measurement information of transmission point and/or the measurement set corresponding to the set of downlink carriers back to the base station according to the indication information.

The CSI corresponding to the set of measurement information of transmission point here refers to CSI measured from respective measurement information of transmission point included in the set of measurement information of transmission point. The CSI corresponding to the measurement set corresponding to the set of downlink carriers refers to CSI measured from respective measurement information of transmission point included in the measurement set. The CSI corresponding to the set of measurement information of transmission point and the measurement set corresponding to the set of downlink carriers refers to CSI measured from respective measurement information of transmission point included in the set of measurement information of transmission point in the measurement set corresponding to the set of downlink carriers.

In an embodiment, in the step 40, the user equipment can receive the indication information sent from the base station for a set of measurement information of transmission point in a preconfigured measurement set for which CSI is to be fed back aperiodically, where the set of measurement information of transmission point includes a part or all of the measurement information of transmission point in the measurement set; and
Correspondingly in the step 41, the user equipment feeds CSI corresponding to the set of measurement information of transmission point indicated by the indication information back to the base station.

In another embodiment, in the step 40, the user equipment can receive the indication information sent from the base station for the determined measurement set corresponding to the set of downlink carriers for which CSI is to be fed back aperiodically; and
Correspondingly in the step 41, the user equipment feeds CSI corresponding to the indicated measurement set corresponding to the set of downlink carriers back to the base station.

In a further embodiment, in the step 40, the user equipment can receive the indication information sent from the base station for a set of measurement information of transmission point in the determined measurement set corresponding to the set of downlink carriers for which CSI is to be fed back aperiodically, where the set of measurement information of transmission point includes a part or all of the measurement information of transmission point in the determined measurement set corresponding to the set of downlink carriers; and
Correspondingly in the step 41, the user equipment feeds CSI corresponding to the set of measurement information of transmission point in the indicated measurement set corresponding to the set of downlink carriers back to the base station, where the set of measurement information of transmission point includes a part or all of the measurement information of transmission point in the measurement set.

The indication information can occupy 1 bit or 2 bits or 3 bits, and examples will be described below:
If the user equipment receives 1-bit indication information, then the user equipment feeds CSI corresponding to a set of measurement information of transmission point including all the measurement information of transmission point in the preconfigured measurement set back to the base station; or
If the user equipment receives 1-bit indication information, then the user equipment feeds CSI corresponding to a set of measurement information of transmission point including the first measurement information of transmission point in the preconfigured measurement set back to the base station; or
If the user equipment receives 2-bit or 3 bit indication information, then the user equipment feeds CSI corresponding to the indicated first measurement information of transmission point in the measurement set or the indicated set of measurement information of transmission point in the measurement set back to the base station, where the set of measurement information of transmission point includes a part or all of the measurement information of transmission point in the measurement set.

If the user equipment receives 2-bit or 3 bit indication information, then the user equipment feeds CSI corresponding to the measurement set corresponding to the current carrier of the indication information or the indicated measurement set corresponding to the set of downlink carriers back to the base station; and
If the user equipment receives 2-bit or 3-bit or 4-bit indication information, then the user equipment feeds CSI corresponding to the set of measurement information of transmission point in the indicated measurement set corresponding to the set of downlink carriers back to the base station, where the set of measurement information of transmission point includes a part or all of the measurement information of transmission point in the measurement set.

Furthermore before the user equipment receives the indication information, the user equipment receives information sent from the base station in higher-layer signaling about sets of measurement information of transmission point in respective measurement sets, measurement sets corresponding to respective sets of downlink carriers and sets of measurement information of transmission point in the measurement sets corresponding to the respective sets of downlink carriers.

In the step 40, the user equipment can receive the indication information in DCI signaling over a PDCCH.

A solution to interaction between the base station and user equipment sides is implemented as follows:
Firstly a base station determines from a result of joint scheduling of multiple transmission points a set of measurement information of transmission point and/or a measurement set corresponding to a set of downlink carriers for which CSI is to be fed back aperiodically by a user equipment; and sends to the user equipment indication information for the determined set of measurement information of transmission point and/or the determined measurement set corresponding to the set of downlink carriers for which CSI is to be fed back aperiodically.

Then the user equipment receives the indication information sent from the base station for the set of measurement information of transmission point and/or the measurement set corresponding to the set of downlink carriers for which CSI is to be fed back aperiodically; and feeds CSI corresponding to the set of measurement information of transmission point and/or the measurement set corresponding to the set of downlink carriers back to the base station according to the indication information.

The interaction solution can be implemented particularly at the base station and the user equipment as described above respectively for the methods at the base station and user equipment sides, and a repeated description thereof will be omitted here.

The invention will be described below in details.

A base station indicates from a result of joint scheduling of multiple transmission points to a UE in DCI signaling a determined set of measurement information of transmission point and/or a determined measurement set corresponding to a set of downlink carriers for which CSI is to be fed back aperiodically. Particularly the base station determines the number of bits used for the DCI signaling according to at least one of a system configuration of the UE, the result of joint scheduling and contents of the measurement set, where the number of bits can be 1 to 3 bits.

In a first scenario, a measurement set is configured for all the downlink carriers, and respective sets of measurement information of transmission point in the measurement set includes configuration information of downlink reference signals of all the downlink carriers; and

When the measurement set includes only one measurement information of transmission point, 1-bit DCI signaling can be used for indication; or 2-bit DCI signaling can be used to indicate measurement information of a part or all of the downlink carriers included in the measurement information of transmission point for which CSI is to be fed back aperiodically, for example, to indicate measurement information of a primary carrier or a non-primary carrier included in the measurement information of transmission point for which CSI is to be fed back aperiodically

When the measurement set includes multiple measurement information of transmission point, 1-bit or 2-bit or 3-bit DCI signaling can be used for indication.

In a second scenario 2, a measurement set is configured respectively for each set of downlink carriers, and respective measurement information of transmission point in each measurement set includes configuration information of downlink reference signals of respective downlink carriers in the corresponding set of downlink carriers.

When the UE is configured with only one downlink carrier, 1-bit or 2-bit DCI signaling can be used for indication.

When the UE is configured with multiple downlink carriers, 1-bit or 2-bit or 3-bit DCI signaling can be used for indication.

The user equipment feeds back CSI corresponding to the set of measurement information of transmission point and/or the measurement set corresponding to the set of downlink carriers according to the information included in the DCI signaling upon reception of the signaling sent from the base station.

It shall be noted that all the foregoing measurement sets include a primary transmission point, and if a measurement set defined in the standard may not include a primary transmission point, then a measurement set as referred to in the invention is a union of the measurement set and a primary transmission point. Moreover the foregoing measurement information of transmission point generally refers to configuration information of a downlink reference signal corresponding to the transmission point and commonly CSI-RS information corresponding to the transmission point.

A first embodiment corresponds to the foregoing scenario 1.

When the measurement set includes only one measurement information of transmission point, 1-bit DCI signaling can be used to indicate a set of measurement information of transmission point including the one measurement information of transmission point in the measurement set for which CSI is to be fed back aperiodically by the user equipment; or 2-bit DCI signaling can be used to indicate measurement information of a part or all of the downlink carriers included in the measurement information of transmission point for which CSI is to be fed back aperiodically by the user equipment.

When the measurement set is configured with multiple measurement information of transmission point, the following methods can be adopted:
In a method 1, 1-bit DCI signaling can be used to indicate a set of measurement information of transmission point including the all the measurement information of transmission point in the measurement set for which CSI is to be fed back aperiodically by the user equipment;
In a method 2, 2-bit DCI signaling can be used to indicate a set of measurement information of transmission point in the measurement set for which CSI is to be fed back aperiodically by the user equipment, particularly as depicted in the following table:

| Trigger bit field in DCI | Corresponding contents |
|---|---|
| '00' | No aperiodical CSI feedback triggered |
| '01' | Feed back CSI corresponding to measurement information of only a primary transmission point (that is, feed back CSI aperiodically for a set of measurement information of transmission point including measurement information of only the primary transmission point in the measurement set) |
| '10' | Feed back CSI corresponding to measurement information of all the non-primary transmission points in the measurement set (that is, feed back CSI aperiodically for a set of measurement information of transmission point including measurement information of all the other transmission points than the primary transmission point in the measurement set) |
| '11' | Feed back CSI corresponding to all the measurement information of transmission point in the measurement set (that is, feed back CSI aperiodically for a set of measurement information of transmission point including all the measurement information of transmission point in the measurement set) |

Or

| Trigger bit field in DCI | Corresponding contents |
|---|---|
| '00' | No aperiodical CSI feedback triggered |
| '01' | Feed back CSI of only a primary transmission point (that is, feed back CSI aperiodically for a set of measurement information of transmission point including measurement information of only a primary transmission point in the measurement set) |
| '10' | Feed back CSI corresponding to only a higher-layer configured first set of measurement information of transmission point |
| '11' | Feed back CSI corresponding to only a higher-layer configured second set of measurement information of transmission point |

In a method 3, 3-bit DCI signaling can be used to indicate a set of measurement information of transmission point in the measurement set for which CSI is to be fed back aperiodically by the user equipment, particularly as depicted in the following table:

| Trigger bit field in DCI | Corresponding contents |
|---|---|
| '000' | No aperiodical CSI feedback triggered |
| '001' | Feed back CSI corresponding to measurement information of a primary transmission point over only a primary carrier (that is, feed back CSI aperiodically for a set of measurement information of transmission point including measurement information of the primary transmission point over only the primary carrier) |
| '010' | Feed back CSI corresponding to measurement information of a primary transmission point over all the serving carriers (that is, feed back CSI aperiodically for a set of measurement information of transmission point including measurement information of the primary transmission point over all the serving carriers) |
| '011' | Feed back CSI corresponding to only a higher-layer configured first set of measurement information of transmission point/reference signals |
| '100' | Feed back CSI corresponding to only a higher-layer configured second set of measurement information of transmission point |
| '101' | Feed back CSI corresponding to only a higher-layer configured third set of measurement information of transmission point |
| '110' | Feed back CSI corresponding to only a higher-layer configured fourth set of measurement information of transmission point |
| "111" | Reserved |

A second embodiment corresponds to the foregoing scenario 2 in which each set of downlink carriers includes only one downlink carrier.

When the UE is configured with only one downlink carrier, at this time there is only one set of downlink carriers, and also there is only a measurement set, so 1-bit DCI signaling can be used to indicate the measurement set for which CSI is to be fed back aperiodically by the user equipment; or 2-bit DCI signaling can be used to indicate a set of measurement information of transmission point in the measurement set for which CSI is to be fed back aperiodically by the user equipment, for example:

| Trigger bit field in DCI | Corresponding contents |
|---|---|
| '00' | No aperiodical CSI feedback triggered |
| '01' | Feed back CSI corresponding to measurement information of only a primary transmission point (that is, feed back CSI aperiodically for a set of measurement information of transmission point including measurement information of only the primary transmission point in the measurement set) |
| '10' | Feed back CSI corresponding to only a higher-layer configured first set of measurement information of transmission point in the measurement set |
| '11' | Feed back CSI corresponding to only a higher-layer configured second set of measurement information of transmission point in the measurement set |

When the UE is configured with multiple downlink carriers, there are multiple sets of downlink carriers, each of which corresponds to a measurement set, and the following methods can be adopted:
In a method 1, 1-bit DCI signaling can be used to indicate the measurement sets corresponding to all the sets of downlink carriers for which CSI is to be fed back aperiodically by the user equipment;
In a method 2, 2-bit DCI signaling can be used to indicate the measurement sets corresponding to a part of the sets of downlink carriers for which CSI is to be fed back aperiodically by the user equipment, for example:

| Trigger bit field in DCI | Corresponding contents |
|---|---|
| '00' | No aperiodical CSI feedback triggered |
| '01' | Feed back CSI of only a primary carrier (that is, feed back CSI aperiodically for a measurement set corresponding to the primary carrier) |
| '10' | Feed back CSI of only a higher-layer configured first set of serving carriers (that is, feed back CSI aperiodically for a measurement set corresponding to the higher-layer configured first set of serving carriers) |
| '11' | Feed back CSI of only a higher-layer configured second set of serving carriers (that is, feed back CSI aperiodically for a measurement set corresponding to the higher-layer configured second set of serving carriers) |

Where a feedback of CSI of a serving carrier refers to a feedback of CSI corresponding to all the measurement information of transmission point in a measurement set corresponding to the serving carrier.

In a method 3, 3-bit DCI signaling can be used to indicate sets of measurement information of transmission point in the measurement sets corresponding to a part of the sets of downlink carriers for which CSI is to be fed back aperiodically by the user equipment, for example:

| Trigger bit field in DCI | Corresponding contents |
|---|---|
| '000' | No aperiodical CSI feedback triggered |
| '001' | Feed back CSI corresponding to measurement information of a primary transmission point over only a primary carrier (that is, feed back CSI aperiodically for a set of measurement information of transmission point, including measurement information of the primary transmission point, in a measurement set corresponding to the primary carrier) |
| '010' | Feed back CSI corresponding to measurement information of a primary transmission point over a higher-layer configured first set of serving carriers (that is, feed back CSI aperiodically for a set of measurement information of transmission point, including measurement information of the primary transmission point, in a measurement set corresponding to the higher-layer configured first set of serving carriers) |
| '011' | Feed back CSI corresponding to measurement information of a primary transmission point over a higher-layer configured second set of serving carriers (that is, feed back CSI aperiodically for a set of measurement information of transmission point, including measurement information of the primary transmission point, in a measurement set corresponding to the higher-layer configured second set of serving carriers) |
| '100' | Feed back CSI over the primary carrier (that is, feed back CSI aperiodically for a measurement set corresponding to the primary carrier) |
| '101' | Feed back CSI over the higher-layer configured first set of serving carriers (that is, feed back CSI aperiodically for the measurement set corresponding to the higher-layer configured first set of serving carriers) |
| '110' | Feed back CSI over the higher-layer configured second set of serving carriers (that is, feed back CSI aperiodically for the measurement set corresponding to the higher-layer configured second set of serving carriers) |
| "111" | Reserved |

Where a feedback of CSI of a serving carrier refers to a feedback of CSI corresponding to all the measurement information of transmission point in a measurement set corresponding to the serving carrier.

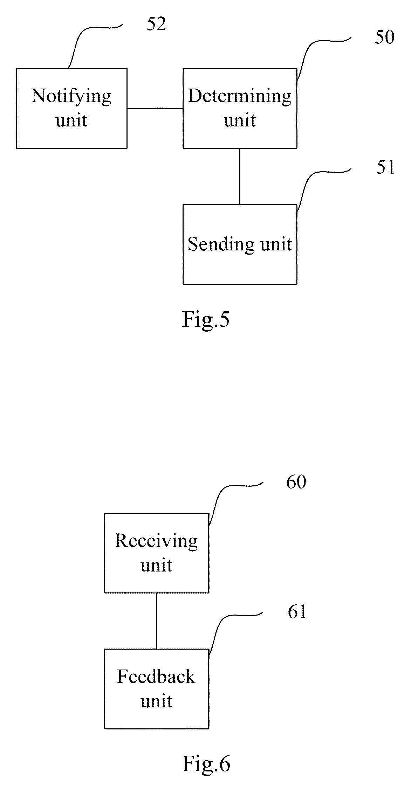

Referring to Fig.5, an embodiment of the invention provides a base station including:
A determining unit 50 is configured to determine from a result of joint scheduling of multiple transmission points a set of measurement information of transmission point and/or a measurement set corresponding to a set of downlink carriers for which CSI is to be fed back aperiodically by a user equipment; and
A sending unit 51 is configured to send to the user equipment indication information for the determined set of measurement information of transmission point and/or the determined measurement set corresponding to the set of downlink carriers for which CSI is to be fed back aperiodically.

The sending unit 51 includes one or any combination of a first indicating unit, a second indicating unit and a third indicating unit, where:
The first indicating unit is configured to send to the user equipment the indication information for a set of measurement information of transmission point in a preconfigured measurement set for which CSI is to be fed back aperiodically, where the set of measurement information of transmission point includes a part or all of the measurement information of transmission point in the measurement set;
The second indicating unit is configured to send to the user equipment the indication information for the determined measurement set corresponding to the set of downlink carriers for which CSI is to be fed back aperiodically; and
The third indicating unit is configured to send to the user equipment the indication information for a set of measurement information of transmission point in the determined measurement set corresponding to the set of downlink carriers for which CSI is to be fed back aperiodically, where the set of measurement information of transmission point includes a part or all of the measurement information of transmission point in the determined measurement set corresponding to the set of downlink carriers.

The indication information can occupy 1 bit or 2 bits or 3 bits.

The first indicating unit is configured:
To send 1-bit indication information to the user equipment to indicate a set of measurement information of transmission point including all the measurement information of transmission point in the preconfigured measurement set for which CSI is to be fed back aperiodically by the user equipment; or
To send the 1-bit indication information to the user equipment to indicate a set of measurement information of transmission point including the first measurement information of transmission point in the preconfigured measurement set for which CSI is to be fed back aperiodically by the user equipment; or
To send 2-bit or 3-bit indication information to the user equipment to indicate the first measurement information of transmission point in the measurement set or the set of measurement information of transmission point in the measurement set for which CSI is to be fed back aperiodically by the user equipment, where the set of measurement information of transmission point includes a part or all of the measurement information of transmission point in the measurement set.

The second indicating unit is configured:
To send 2-bit or 3-bit indication information to the user equipment to indicate the current carrier of the indication information or the determined measurement set corresponding to the set of downlink carriers for which CSI is to be fed back aperiodically by the user equipment.

The third indicating unit is configured:
To send 2-bit or 3-bit or 4-bit indication information to the user equipment to indicate the set of measurement information of transmission point in the determined measurement set corresponding to the set of downlink carriers for which CSI is to be fed back aperiodically by the user equipment, where the set of measurement information of transmission point includes a part or all of the measurement information of transmission point in the determined measurement set corresponding to the set of downlink carriers.

The base station further includes:
A notifying unit 52 is configured to notify in higher-layer signaling the user equipment of information about sets of measurement information of transmission point in respective measurement sets, measurement sets corresponding to respective sets of downlink carriers and sets of measurement information of transmission point in the measurement sets corresponding to the respective sets of downlink carriers before the indication information is sent to the user equipment.

The sending unit 51 is configured:
To send the indication information to the user equipment in Downlink Control Information (DCI) signaling over a Physical Downlink Control Channel (PDCCH).

The measurement information of transmission point includes configuration information of a downlink reference signal corresponding to the transmission point or an index of the configuration information or cell ID information corresponding to the transmission point.

Referring to Fig.6, an embodiment of the invention provides a user equipment including:
A receiving unit 60 is configured to receive indication information sent from a base station for a set of measurement information of transmission point and/or a measurement set corresponding to a set of downlink carriers for which CSI is to be fed back aperiodically; and
A feedback unit 61 is configured to feed CSI corresponding to the set of measurement information of transmission point and/or the measurement set corresponding to the set of downlink carriers back to the base station according to the indication information.

The receiving unit 60 is configured:
To receive the indication information sent from the base station for a set of measurement information of transmission point in a preconfigured measurement set for which CSI is to be fed back aperiodically, where the set of measurement information of transmission point includes a part or all of the measurement information of transmission point in the measurement set; or
To receive the indication information sent from the base station for the determined measurement set corresponding to the set of downlink carriers for which CSI is to be fed back aperiodically; or
To receive the indication information sent from the base station for a set of measurement information of transmission point in the determined measurement set corresponding to the set of downlink carriers for which CSI is to be fed back aperiodically, where the set of measurement information of transmission point includes a part or all of the measurement information of transmission point in the determined measurement set corresponding to the set of downlink carriers.

The indication information occupies 1 bit or 2 bits or 3 bits.

The feedback unit 61 is configured:
If 1-bit indication information is received, to feed CSI corresponding to a set of measurement information of transmission point including all the measurement information of transmission point in the preconfigured measurement set back to the base station; or
If 1-bit indication information is received, to feed CSI corresponding to a set of measurement information of transmission point including the first measurement information of transmission point in the preconfigured measurement set back to the base station; or
If 2-bit or 3 bit indication information is received, to feed CSI corresponding to the indicated first measurement information of transmission point in the measurement set or the indicated set of measurement information of transmission point in the measurement set back to the base station, where the set of measurement information of transmission point includes a part or all of the measurement information of transmission point in the measurement set; or
If 2-bit or 3 bit indication information is received, to feed CSI corresponding to the measurement set corresponding to the current carrier of the indication information or the measurement set corresponding to the indicated set of downlink carriers back to the base station; or
If 2-bit or 3-bit or 4-bit indication information is received, to feed CSI corresponding to the set of measurement information of transmission point in the measurement set corresponding to the indicated set of downlink carriers back to the base station, where the set of measurement information of transmission point includes a part or all of the measurement information of transmission point in the measurement set.

The receiving unit 60 is further configured:
To receive information sent from the base station in higher-layer signaling about sets of measurement information of transmission point in respective measurement sets, measurement sets corresponding to respective sets of downlink carriers and sets of measurement information of transmission point in the measurement sets corresponding to the respective sets of downlink carriers.

The receiving unit 60 is configured:
To receive the indication information in Downlink Control Information (DCI) signaling over a Physical Downlink Control Channel (PDCCH).

The measurement information of transmission point includes configuration information of a downlink reference signal corresponding to the transmission point or an index of the configuration information or cell ID information corresponding to the transmission point.

In summary, the invention has the following advantageous effects:
In the solution according to an embodiment of the invention, a base station determines from a result of joint scheduling of multiple transmission points a set of measurement information of transmission point and/or a measurement set corresponding to a set of downlink carriers for which CSI is to be fed back aperiodically by a user equipment; and sends to the user equipment indication information for the determined set of measurement information of transmission point and/or the determined measurement set corresponding to the set of downlink carriers for which CSI is to be fed back aperiodically, thereby implementing the solution in which the base station indicates the set of measurement information of transmission point and/or the measurement set for which CSI is to be fed back aperiodically by the user equipment.

The user equipment receives the indication information sent from the base station for the set of measurement information of transmission point and/or the measurement set corresponding to the set of downlink carriers for which CSI is to be fed back aperiodically; and feeds CSI corresponding to the set of measurement information of transmission point and/or the measurement set corresponding to the set of downlink carriers back to the base station according to the indication information, thereby implementing the solution in which the user equipment feeds back CSI aperiodically for the set of measurement information of transmission point and/or the measurement set indicated by the base station.

Since in the invention, the base station can indicate the set of measurement information of transmission point and/or the measurement set for which CSI is to be fed back aperiodically by the user equipment, and the user equipment can feed back CSI according to the indication by the base station, so that the base station can obtain CSI required for CoMP transmission and can further support various CoMP transmission solutions to thereby obtain a significant throughout gain.

The invention can support a feedback of CSI required for both single-point transmission and CoMP transmission. The invention with backward compatibility can be compatible with an existing method of feeding back CSI aperiodically.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Although the preferred embodiments of the invention have been described, those skilled in the art benefiting from the underlying inventive concept can make additional modifications and variations to these embodiments. Therefore the appended claims are intended to be construed as encompassing the preferred embodiments and all the modifications and variations coming into the scope of the invention.

Evidently those skilled in the art can make various modifications and variations to the invention without departing from the spirit and scope of the invention. Thus the invention is also intended to encompass these modifications and variations thereto so long as the modifications and variations come into the scope of the claims appended to the invention and their equivalents.

## Claims

1. A method of indicating a feedback of Channel State Information (CSI), wherein the method comprises:
determining, by a base station, from a result of joint scheduling of multiple transmission points a set of measurement information of transmission point and/or a measurement set corresponding to a set of downlink carriers for which CSI is to be fed back aperiodically by a user equipment; and
sending, by the base station, to the user equipment indication information for the determined set of measurement information of transmission point and/or the determined measurement set corresponding to the set of downlink carriers for which CSI is to be fed back aperiodically.

2. The method according to claim 1, wherein sending, by the base station, to the user equipment the indication information for the determined set of measurement information of transmission point and/or the determined measurement set corresponding to the set of downlink carriers for which CSI is to be fed back aperiodically comprises:
sending, by the base station, to the user equipment the indication information for a set of measurement information of transmission point in a preconfigured measurement set for which CSI is to be fed back aperiodically, wherein the set of measurement information of transmission point includes a part or all of the measurement information of transmission point in the measurement set; or
sending, by the base station, to the user equipment the indication information for the determined measurement set corresponding to the set of downlink carriers for which CSI is to be fed back aperiodically; or
sending, by the base station, to the user equipment the indication information for a set of measurement information of transmission point in the determined measurement set corresponding to the set of downlink carriers for which CSI is to be fed back aperiodically, wherein the set of measurement information of transmission point includes a part or all of the measurement information of transmission point in the determined measurement set corresponding to the set of downlink carriers.

3. The method according to claim 2, wherein the indication information occupies 1 bit or 2 bits or 3 bits.

4. The method according to claim 3, wherein sending, by the base station, to the user equipment the indication information for the set of measurement information of transmission point in a preconfigured measurement set for which CSI is to be fed back aperiodically comprises:
sending, by the base station, 1-bit indication information to the user equipment to indicate a set of measurement information of transmission point including all the measurement information of transmission point in the preconfigured measurement set for which CSI is to be fed back aperiodically by the user equipment; or
sending, by the base station, the 1-bit indication information to the user equipment to indicate a set of measurement information of transmission point including a first measurement information of transmission point in the preconfigured measurement set for which CSI is to be fed back aperiodically by the user equipment; or
sending, by the base station, 2-bit or 3-bit indication information to the user equipment to indicate the first measurement information of transmission point in the measurement set or the set of measurement information of transmission point in the measurement set for which CSI is to be fed back aperiodically by the user equipment, wherein the set of measurement information of transmission point includes a part or all of the measurement information of transmission point in the measurement set.

5. The method according to claim 3, wherein sending, by the base station, to the user equipment the indication information for the determined measurement set corresponding to the set of downlink carriers for which CSI is to be fed back aperiodically comprises:
sending, by the base station, 2-bit or 3-bit indication information to the user equipment to indicate the measurement set corresponding to the current carrier of the indication information or the determined measurement set corresponding to the set of downlink carriers for which CSI is to be fed back aperiodically by the user equipment.

6. The method according to claim 3, wherein sending, by the base station, to the user equipment the indication information for the set of measurement information of transmission point in the determined measurement set corresponding to the set of downlink carriers for which CSI is to be fed back aperiodically comprises:
sending, by the base station, 2-bit or 3-bit or 4-bit indication information to the user equipment to indicate the set of measurement information of transmission point in the determined measurement set corresponding to the set of downlink carriers for which CSI is to be fed back aperiodically by the user equipment, wherein the set of measurement information of transmission point includes a part or all of the measurement information of transmission point in the determined measurement set corresponding to the set of downlink carriers.

7. The method according to any one of claims 2-6, wherein before the base station sends the indication information to the user equipment, the method further comprises:
notifying, by the base station, in higher-layer signaling the user equipment of information about sets of measurement information of transmission point in respective measurement sets, measurement sets corresponding to respective sets of downlink carriers and sets of measurement information of transmission point in the measurement sets corresponding to the respective sets of downlink carriers

8. The method according to any one of claims 1-6, wherein the base station sends the indication information to the user equipment in Downlink Control Information (DCI) signaling over a Physical Downlink Control Channel (PDCCH).

9. The method according to any one of claims 2-6, wherein the measurement information of transmission point includes configuration information of a downlink reference signal corresponding to the transmission point or an index of the configuration information or cell identifier (ID) information corresponding to the transmission point.

10. A method of feeding back Channel State Information (CSI), the method comprising:
receiving, by a user equipment, indication information sent from a base station for a set of measurement information of transmission point and/or a measurement set corresponding to a set of downlink carriers for which CSI is to be fed back aperiodically; and
feeding, by the user equipment, CSI corresponding to the set of measurement information of transmission point and/or the measurement set corresponding to the set of downlink carriers back to the base station according to the indication information.

11. The method according to claim 10, wherein receiving, by the user equipment, the indication information sent from the base station for the set of measurement information of transmission point and/or the measurement set corresponding to the set of downlink carriers for which CSI is to be fed back aperiodically comprises:
receiving, by the user equipment, the indication information sent from the base station for a set of measurement information of transmission point in a preconfigured measurement set for which CSI is to be fed back aperiodically, wherein the set of measurement information of transmission point includes a part or all of the measurement information of transmission point in the measurement set; or
receiving, by the user equipment, the indication information sent from the base station for the measurement set corresponding to the set of downlink carriers for which CSI is to be fed back aperiodically; or
receiving, by the user equipment, the indication information sent from the base station for a set of measurement information of transmission point in the measurement set corresponding to the set of downlink carriers for which CSI is to be fed back aperiodically, wherein the set of measurement information of transmission point includes a part or all of the measurement information of transmission point in the measurement set corresponding to the set of downlink carriers.

12. The method according to claim 11, wherein the indication information occupies 1 bit or 2 bits or 3 bits.

13. The method according to claim 12, wherein feeding, by the user equipment, the CSI corresponding to the set of measurement information of transmission point and/or the measurement set corresponding to the set of downlink carriers back to the base station according to the indication information comprises:
if the user equipment receives 1-bit indication information, feeding, by the user equipment, CSI corresponding to a set of measurement information of transmission point including all the measurement information of transmission point in the preconfigured measurement set back to the base station; or
if the user equipment receives 1-bit indication information, feeding, by the user equipment, CSI corresponding to a set of measurement information of transmission point including a first measurement information of transmission point in the preconfigured measurement set back to the base station; or
if the user equipment receives 2-bit or 3 bit indication information, feeding, by the user equipment, CSI corresponding to the first measurement information of transmission point in the measurement set or the set of measurement information of transmission point in the measurement set back to the base station, wherein the set of measurement information of transmission point includes a part or all of the measurement information of transmission point in the measurement set; or
if the user equipment receives 2-bit or 3 bit indication information, feeding, by the user equipment, CSI corresponding to the measurement set corresponding to the current carrier of the indication information or the measurement set corresponding to the set of downlink carriers back to the base station; and
if the user equipment receives 2-bit or 3-bit or 4-bit indication information, feeding, by the user equipment, CSI corresponding to the set of measurement information of transmission point in the measurement set corresponding to the set of downlink carriers back to the base station, wherein the set of measurement information of transmission point includes a part or all of the measurement information of transmission point in the measurement set.

14. The method according to any one of claims 11 to 13, wherein before the user equipment receives the indication information, the method further comprises:
receiving, by the user equipment, information sent from the base station in higher-layer signaling about sets of measurement information of transmission point in respective measurement sets, measurement sets corresponding to respective sets of downlink carriers and sets of measurement information of transmission point in the measurement sets corresponding to the respective sets of downlink carriers.

15. The method according to any one of claims 10 to 13, wherein the user equipment receives the indication information in Downlink Control Information (DCI) signaling over a Physical Downlink Control Channel (PDCCH).

16. The method according to any one of claims 11 to 13, wherein the measurement information of transmission point includes configuration information of a downlink reference signal corresponding to the transmission point or an index of the configuration information or cell identifier (ID) information corresponding to the transmission point.

17. A base station, wherein the base station comprises:
a determining unit configured to determine from a result of joint scheduling of multiple transmission points a set of measurement information of transmission point and/or a measurement set corresponding to a set of downlink carriers for which CSI is to be fed back aperiodically by a user equipment; and
a sending unit configured to send to the user equipment indication information for the determined set of measurement information of transmission point and/or the determined measurement set corresponding to the set of downlink carriers for which CSI is to be fed back aperiodically.

18. The base station according to claim 17, wherein the sending unit comprises one or any combination of a first indicating unit, a second indicating unit and a third indicating unit, wherein:
the first indicating unit is configured to send to the user equipment the indication information for a set of measurement information of transmission point in a preconfigured measurement set for which CSI is to be fed back aperiodically, wherein the set of measurement information of transmission point includes a part or all of the measurement information of transmission point in the measurement set;
the second indicating unit is configured to send to the user equipment the indication information for the determined measurement set corresponding to the set of downlink carriers for which CSI is to be fed back aperiodically; and
the third indicating unit is configured to send to the user equipment the indication information for a set of measurement information of transmission point in the determined measurement set corresponding to the set of downlink carriers for which CSI is to be fed back aperiodically, wherein the set of measurement information of transmission point includes a part or all of the measurement information of transmission point in the determined measurement set corresponding to the set of downlink carriers.

19. The base station according to claim 18, wherein the indication information occupies 1 bit or 2 bits or 3 bits.

20. The base station according to claim 19, wherein the first indicating unit is configured:
to send 1-bit indication information to the user equipment to indicate a set of measurement information of transmission point including all the measurement information of transmission point in the preconfigured measurement set for which CSI is to be fed back aperiodically by the user equipment; or
to send the 1-bit indication information to the user equipment to indicate a set of measurement information of transmission point including a first measurement information of transmission point in the preconfigured measurement set for which CSI is to be fed back aperiodically by the user equipment; or
to send 2-bit or 3-bit indication information to the user equipment to indicate the first measurement information of transmission point in the measurement set or the set of measurement information of transmission point in the measurement set for which CSI is to be fed back aperiodically by the user equipment, wherein the set of measurement information of transmission point includes a part or all of the measurement information of transmission point in the measurement set.

21. The base station according to claim 19, wherein the second indicating unit is configured:
to send 2-bit or 3-bit indication information to the user equipment to indicate the measurement set corresponding to the current carrier of the indication information or the determined measurement set corresponding to the set of downlink carriers for which CSI is to be fed back aperiodically by the user equipment.

22. The base station according to claim 19, wherein the third indicating unit is configured:
to send 2-bit or 3-bit or 4-bit indication information to the user equipment to indicate the set of measurement information of transmission point in the determined measurement set corresponding to the set of downlink carriers for which CSI is to be fed back aperiodically by the user equipment, wherein the set of measurement information of transmission point includes a part or all of the measurement information of transmission point in the determined measurement set corresponding to the set of downlink carriers.

23. The base station according to any one of claims 18 to 22, wherein the base station further comprises:
a notifying unit configured to notify in higher-layer signaling the user equipment of information about sets of measurement information of transmission point in respective measurement sets, measurement sets corresponding to respective sets of downlink carriers and sets of measurement information of transmission point in the measurement sets corresponding to the respective sets of downlink carriers before the indication information is sent to the user equipment.

24. The base station according to any one of claims 17 to 22, wherein the sending unit is configured:
to send the indication information to the user equipment in Downlink Control Information (DCI) signaling over a Physical Downlink Control Channel (PDCCH).

25. The base station according to any one of claims 18 to 22, wherein the measurement information of transmission point includes configuration information of a downlink reference signal corresponding to the transmission point or an index of the configuration information or cell identifier (ID) information corresponding to the transmission point.

26. A user equipment, wherein the user equipment comprises:
a receiving unit configured to receive indication information sent from a base station for a set of measurement information of transmission point and/or a measurement set corresponding to a set of downlink carriers for which CSI is to be fed back aperiodically; and
a feedback unit configured to feed CSI corresponding to the set of measurement information of transmission point and/or the measurement set corresponding to the set of downlink carriers back to the base station according to the indication information.

27. The user equipment according to claim 26, wherein the receiving unit is configured:
to receive the indication information sent from the base station for a set of measurement information of transmission point in a preconfigured measurement set for which CSI is to be fed back aperiodically, wherein the set of measurement information of transmission point includes a part or all of the measurement information of transmission point in the measurement set; or
to receive the indication information sent from the base station for the measurement set corresponding to the set of downlink carriers for which CSI is to be fed back aperiodically; or
to receive the indication information sent from the base station for a set of measurement information of transmission point in the measurement set corresponding to the set of downlink carriers for which CSI is to be fed back aperiodically, wherein the set of measurement information of transmission point includes a part or all of the measurement information of transmission point in the measurement set corresponding to the set of downlink carriers.

28. The user equipment according to claim 27, wherein the indication information occupies 1 bit or 2 bits or 3 bits.

29. The user equipment according to claim 28, wherein the feedback unit is configured:
if 1-bit indication information is received, to feed CSI corresponding to a set of measurement information of transmission point including all the measurement information of transmission point in the preconfigured measurement set back to the base station; or
if 1-bit indication information is received, to feed CSI corresponding to a set of measurement information of transmission point including a first measurement information of transmission point in the preconfigured measurement set back to the base station; or
if 2-bit or 3 bit indication information is received, to feed CSI corresponding to the first measurement information of transmission point in the measurement set or the set of measurement information of transmission point in the measurement set back to the base station, wherein the set of measurement information of transmission point includes a part or all of the measurement information of transmission point in the measurement set; or
if 2-bit or 3 bit indication information is received, to feed CSI corresponding to the measurement set corresponding to the current carrier of the indication information or the measurement set corresponding to the set of downlink carriers back to the base station; or
if 2-bit or 3-bit or 4-bit indication information is received, to feed CSI corresponding to the set of measurement information of transmission point in the measurement set corresponding to the set of downlink carriers back to the base station, wherein the set of measurement information of transmission point includes a part or all of the measurement information of transmission point in the measurement set.

30. The user equipment according to any one of claims 27 to 29, wherein the receiving unit is further configured:
to receive information sent from the base station in higher-layer signaling about sets of measurement information of transmission point in respective measurement sets, measurement sets corresponding to respective sets of downlink carriers and sets of measurement information of transmission point in the measurement sets corresponding to the respective sets of downlink carriers.

31. The user equipment according to any one of claims 26 to 29, wherein the receiving unit is further configured:
to receive the indication information in Downlink Control Information (DCI) signaling over a Physical Downlink Control Channel (PDCCH).

32. The user equipment according to any one of claims 27 to 29, wherein the measurement information of transmission point includes configuration information of a downlink reference signal corresponding to the transmission point or an index of the configuration information or cell identifier (ID) information corresponding to the transmission point.
